# EUROPEAN PATENT APPLICATION

(11) **EP 2 597 755 A1**
(43) Date of publication of application: **29.05.2013**
(21) Application number: 10855005.4
(22) Date of filing: 21.07.2010
(51) Int. Cl.: H02K 3/34, H02K 3/46

(54) **INSULATOR, MOTOR, AND METHOD FOR MANUFACTURING STATOR COMPRISING INSULATOR AND COIL**

(71) Applicant: TOYOTA JIDOSHA KABUSHIKI KAISHA, Toyota-shi, Aichi-ken, 471-8571 (JP)
(72) Inventor: SAITO, Takahiro, Toyota-shi Aichi 471-8571 (JP)
(74) Representative: Kuhnen & Wacker
(86) International application number: PCT/JP2010/062232
(87) International publication number: WO 2012/011168

(57) **Abstract**

Provided are an insulator including a flange to prevent a coil from coming out, and a method for manufacturing a stator including an insulator and a coil, the insulator being configured not to let the flange interfere with the coil when the coil is fitted to the insulator and not to generate any damage at the insulator during the fitting. An insulator 3 is to be fitted to a tooth 51 of a stator 5, on an outer periphery of which a coil 4 is formed, and the insulator 3 includes: a first split body 1 to be disposed on a root side of the tooth 51 when the insulator 3 is fitted to the tooth 51, and a second split body 2 to be disposed on a distal end side of the tooth and to be fitted to the first split body 1, thus forming the insulator 3. The second split body 2 includes a flange 21 at an end face on the distal end side of the tooth so as to prevent the coil 4 from coming out of the insulator.

## Description

### TECHNICAL FIELD

The present invention relates to an insulator that is to be fitted to teeth of a stator core making up a motor and a motor including a stator provided with an insulator including a coil and a rotor, and relates to a method for manufacturing a stator including an insulator and a coil.

### BACKGROUND ART

In the automobile industry, lighter and more compact driving motors with higher power are being developed day by day for further improvement of traveling performance of hybrid vehicles and electric vehicles. Home electric appliances makers also are devoting themselves to develop more compact motors with higher performance to be built in various home electric appliances.

A stator making up a motor includes an annular yoke, a plurality of teeth protruding inwardly in the radius direction from the yoke and a stator core including a lamination of steel plates having a slot formed between adjacent teeth, and the stator is manufactured by wrapping a coil between the teeth while inserting the coil into the slot.

From the viewpoint of securing insulation between the teeth and the coil, insulation paper may be inserted therebetween. The insulation between the coil and the core achieved by this insulation paper, however, tends to form an air layer between the insulation paper and the core, and such air layer will increase thermal resistance, thus causing a problem that joulean heat generated at the coil during motor driving cannot be dissipated to the core sufficiently.

As a measure to cope with this, resin made of an insulation material may be integrally molded around the teeth to form an insulator, thus assuring intimate contact between the insulator and the core so as not to form an air layer therebetween.

As for such integral molding of the insulator around the teeth, this insulator is preferably as thin as possible from the viewpoint of a radiation property. A thinner insulator to improve a better radiation property, however, tends to generate a filling error during injection molding, and moreover since the resin insulator has a much higher linear expansion coefficient than that of the core, a crack is likely to occur due to thermal stress depending on the usage environment.

Then, another manufacturing method has been used, including shaping an insulator beforehand, around which a coil formed beforehand is fitted, and then fitting this to teeth. After fitting the insulator to the teeth, resin may be molded as needed, for example, whereby a gap that may be formed between the insulator and the teeth can be removed, and the aforementioned problem occurring in the integral molding of the insulator around the teeth can be solved.

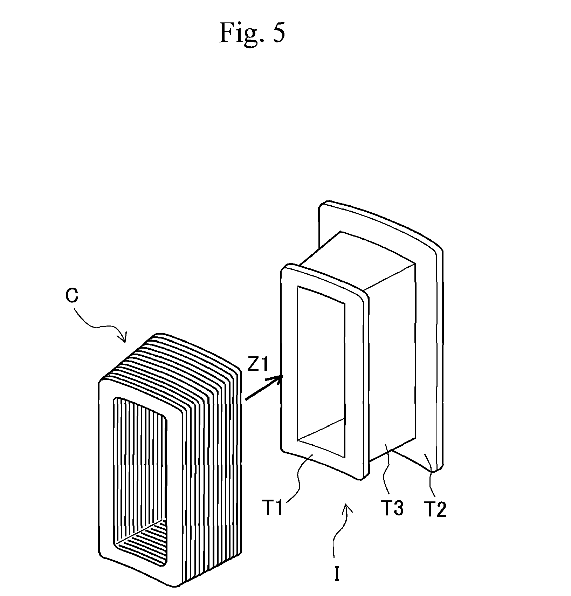

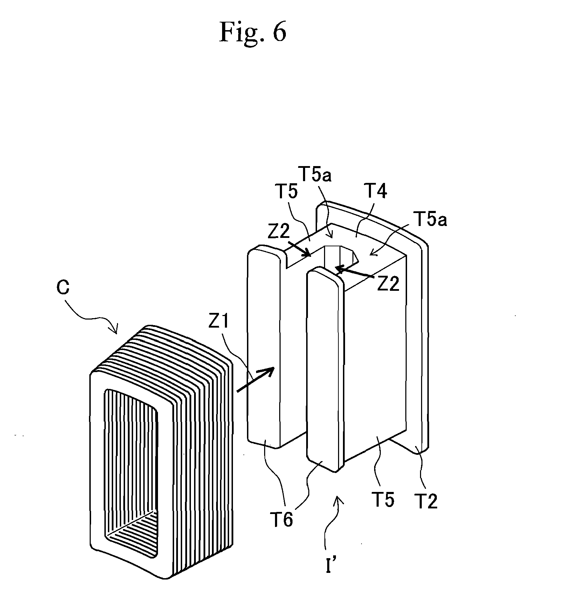

Herein exemplary forms of the conventional insulator include those illustrated in Figs. 5 and 6.

An insulator I shown in Fig. 5 includes a tubular main body T3 to be fitted to a tooth of a stator core not illustrated, a flange T2 to hold a coil C on its yoke side end portion and a flange T 1 to hold the coil C on its teeth distal end side end portion, which are integrally molded with an insulating resin material.

In the illustrated insulator I, the flange T1 on the teeth distal end side is provided so as to prevent the coil C fitted around the insulator I from coming out of the distal end of the insulator.

This flange T1 further functions to suppress copper loss that may occur in the coil during motor driving because the flange T1 can hold a distance of the coil C from the teeth distal end at a fixed length (or can hold separation between the end portion of the coil and the rotor at a predetermined length). That is, in the absence of the flange T1, the coil C will move to the distal end of the teeth and may come out thereof in some cases. When the coil C is caught at the distal end of the tooth, the coil C tends to generate copper loss because of a change in magnetic field resulting from a magnetic flux variation during motor driving. In this way, the flange T1 is expected to exert two major actions and effects of preventing the coil C from coming out and suppressing copper loss, and as illustrated in the drawing, the insulator provided with such a flange on the teeth distal end side is typically used.

Meanwhile, when rectangular wire with high stiffness is directly wound around a thin insulator, there is a high possibility that the insulator breaks. In order to avoid this breakage, a coil wound beforehand has to be fitted to the insulator. However, since the flange T1 exists at the distal end of the insulator I so as to prevent the coil C from coming out, when the coil C prepared by winding wire (rectangular wire in the illustrated example) beforehand is attempted to be fitted to the insulator I (Z1 direction) as shown in Fig. 5, then the flange T1 will interfere with the coil C, causing another problem of a breakage of the flange T1 during the fitting.

Then, instead of the configuration having the tubular main body T3 as in the insulator I shown in Fig. 5, as shown in Fig. 6, an insulator I' of a U-letter shape in a plan view is devised, including a base T4 on the yoke side, two arms T5 and T5 extending from this base T4 and a flange F6 provided at the distal end of the arms T5.

This insulator I' enables the coil C to be fitted to the arms T5 (Z1 direction) without interference of the coil C with the flange T6 by bending the two arms T5 and T5 inwardly (Z2 direction) when the coil C is fitted to the insulator I'.

In the case of this insulator I', however, bending moment will intensively act on a junction part of the base T4 and the arms T5, i.e., root portions T5a of the arms T5, and therefore these root portions T5a have to be formed thick relatively to resist such an external force so as to increase the stiffness.

Although such thick root portions T5a can increase the stiffness, the material thereof is resin not having a high Young's modulus, and therefore problems of plastic deformation and a crack occurring in the root portions T5a of the insulator made of resin due to the bending moment focusing on these areas cannot be solved completely.

In this way, any conventional techniques of fitting an already-formed coil to the insulator provided with a flange on a teeth distal end side thereof so as to prevent the coil from coming out have the possibility of breakage at any position of the insulator.

Herein, as conventional published techniques, Patent Documents 1 and 2 disclose an insulator including two split bodies. More specifically, Patent Document 1 discloses an insulator including split bodies that are divided into two in the circumferential direction (circumferential direction of a stator), i.e., on the left and right side thereof, and Patent Document 2 discloses an insulator including split bodies vertically divided into two halfway through the height direction of the teeth.

In order to clearly understand the configurations of the insulators disclosed in Patent Documents 1 and 2, Figs. 7a and b schematically illustrate them. The insulator disclosed in Patent Document 1 includes two split bodies Ia and Ia that are divided in the circumferential direction, and the insulator disclosed in Patent Document 2 includes two split bodies Ib and Ib that are vertically divided.

Even with any insulator including these split bodies, an attempt to fit an already-formed coil to the insulator provided with a flange at a distal end thereof while avoiding the interference of the coil with the flange will still result in a breakage at any position of the insulator.
Patent Document 1: JP Patent Publication (Kokai) No. 2006-340581
Patent Document 2: JP Patent Publication (Kokai) No. 2007-244065

### DISCLOSURE OF THE INVENTION

### PROBLEM TO BE SOLVED BY THE INVENTION

In view of the aforementioned problems, it is an object of the invention to provide an insulator provided with a flange at a distal end thereof to prevent a coil from coming out, the insulator being configured not to let the flange interfere with the coil during fitting of the coil to the insulator and not to cause a breakage of the insulator during the fitting, to provide a motor including a stator provided with the insulator and the coil and a rotor and further to provide a method for manufacturing a stator including this insulator and a coil.

### MEANS FOR SOLVING THE PROBLEM

In order to fulfill the aforementioned object, an insulator of the present invention is to be fitted to a tooth of a stator, on an outer periphery of the insulator a coil being formed. The insulator may include: a first split body to be disposed on a root side of the tooth when the insulator is fitted to the tooth, and a second split body to be disposed on a distal end side of the tooth and to be fitted to the first split body, thus forming the insulator. The second split body may include a flange at an end face on the distal end side of the tooth so as to prevent the coil from coming out of the insulator.

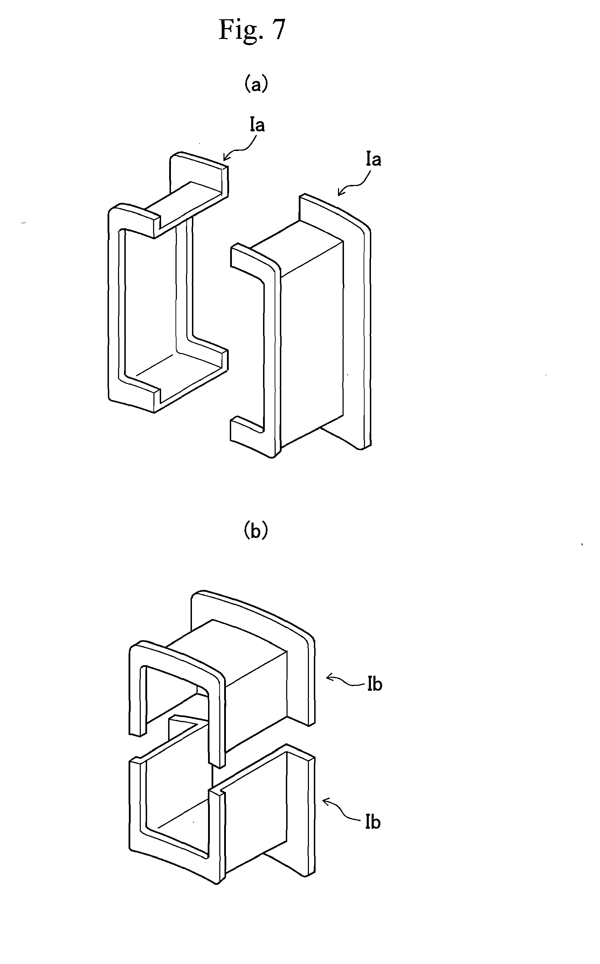

An insulator of the present invention is configured as a whole by fitting two split bodies, and the insulator does not include split bodies as illustrated in Figs. 7a and b, for example, that are divided into in the circumferential direction (left and right direction) and are divided vertically. Instead, the insulator includes split bodies that are divided in the protruding direction of teeth of a stator, i.e., in the radial direction, and at least one of the split bodies (a second split body) includes the entire flange at a teeth distal end side to prevent the coil coming out.

A first split body to be disposed on a tooth root side (yoke side) when the insulator is fitted to the tooth can include a tubular main body to be fitted to the tooth and a separate flange to hold the coil at the yoke side end portion.

Herein this tubular main body includes a notch at a part of a side face thereof, and a second split body includes a side face (side piece) having a complementary shape with the shape of the notch and a flange to prevent the coil from coming out. These notch and side piece are fitted to each other, whereby the insulator can be formed.

The aforementioned notch provided at a side face of the main body of the first split body (and the side piece of the second split body having a complementary shape thereto) may have various shapes, including a trapezoidal notch, an elongated strip-shaped notch, a triangle-shape notch, a semielliptical-shape notch and the like, and the side piece may have shapes corresponding thereto.

Further the side piece of the second split body may include a hook at a tip end thereof, the hook engaging with a concave groove or a through hole formed at a yoke of a stator core when the second split body is fitted to the first split body, and the engagement of this hook with the concave groove or the like of the stator core allows the insulator to the fitted to the tooth for fixing.

According to the aforementioned insulator of the present invention, the flange of the insulator on the tooth distal end side does not become obstacle when a coil prepared by winding wire beforehand is provided, and further when the coil is provided around the insulator, there is no damage occurring at any position of the insulator.

The present invention further relates to a motor including a stator in which the aforementioned insulator including the coil is fitted to the tooth, and a rotor provided inside the stator.

The present invention still further relates to a method for manufacturing a stator including an insulator and a coil. The method includes the steps of: a first step of preparing the insulator including a first split body to be disposed on a root side of a tooth when the insulator is fitted to the tooth and a second split body to be disposed on a distal end side of the tooth and to be fitted to the first split body, thus forming the insulator, the second split body including a flange at an end face on the distal end side of the tooth so as to prevent the coil from coming out of the insulator; and a second step of engaging the coil formed beforehand to the second split body and fitting the second split body to the first split body disposed on the tooth root side so as to form the insulator around the tooth, while forming the coil around the insulator.

According to this manufacturing method, the coil is engaged with the second split body at a flange, for example, and the first split body is fitted to a tooth of a stator, and then the second split body with which the coil is engaged is fitted to the first split body, whereby the insulator and the coil are formed around the tooth at once.

As another embodiment of the method for manufacturing a stator including an insulator and a coil of the present invention, the method may include the steps of: engaging a coil formed beforehand with a second split body and fitting the second split body to a first split body to configure an insulator around which the coil is formed, and then fitting this insulator to a tooth.

In any manufacturing method, the flange of the insulator on the teeth distal end side does not become an obstacle when a coil is formed around the insulator, and so an insulator with a flange and provided with a coil can be effectively provided around a tooth.

### EFFECTS OF THE INVENTION

As can be understood from the above description, according to the insulator and the method for manufacturing a stator including this insulator and a coil of the present invention, the insulator includes a first split body to be fitted to a root part of a tooth and a second split body at least including a flange to prevent the coil from coming out and to be fitted to the first split body, whereby the coil can be provided around the insulator by fitting the first and second split bodies without interfering the coil formed beforehand with the flange and further without breaking the first and second split bodies.

### BRIEF DESCRIPTION OF THE DRAWINGS

Fig. 1 is an exploded perspective view of an insulator of the present invention, schematically showing the state where the insulator is fitted to a tooth of a stator.
Fig. 2 is a perspective view showing one embodiment of an insulator provided with a coil formed around a tooth by the fitting shown in Fig. 1.
Fig. 3 shows the flow in the order of Fig. 3(a), (b) and (c), describing one embodiment of a manufacturing method of a stator including the insulator of the present invention and a coil.
Fig. 4 is a perspective view illustrating another embodiment of the insulator.
Fig. 5 shows one embodiment of the conventional insulator, describing the problem occurring when a coil is fitted to the insulator.
Fig. 6 shows another embodiment of the conventional insulator, describing the problem occurring when a coil is fitted to the insulator.
Fig. 7(a) and (b) both are perspective views illustrating still other embodiments of the conventional insulator.

### DESCRIPTION OF REFERENCE NUMBERS

- 1, 1A: First split body
- 11, 11A: Flange on a tooth root side
- 11a: Opening
- 12, 12A: Tubular main body
- 12a, 12Aa: Notch
- 2, 2A: Second split body
- 21, 21A: Flange on a tooth distal end side
- 21a: Opening
- 22, 22A: Side piece
- 22a: Hook
- 3, 3A: Insulator
- 4: Coil
- 5: Stator
- 51: Tooth
- 52: Yoke
- 52a: Concave groove

### BEST MODE FOR CARRYING OUT THE INVENTION

The following describes embodiments of the present invention, with reference to the drawings. Note here that the shape of a notch formed in a tubular main body of a first split body and the shape of a side piece of a second split body are not limited to the illustrated examples, and various shapes may be used therefor as long as they have mutually complementary shapes. The illustrated examples show the state where an insulator is fitted to a tooth of an annular stator. Alternatively, a stator may include split stators (each stator including an arc-shaped yoke and one tooth), an insulator provided with a coil may be fitted to the tooth of each split stator, and these split stator cores may be assembled in a circumferential direction.

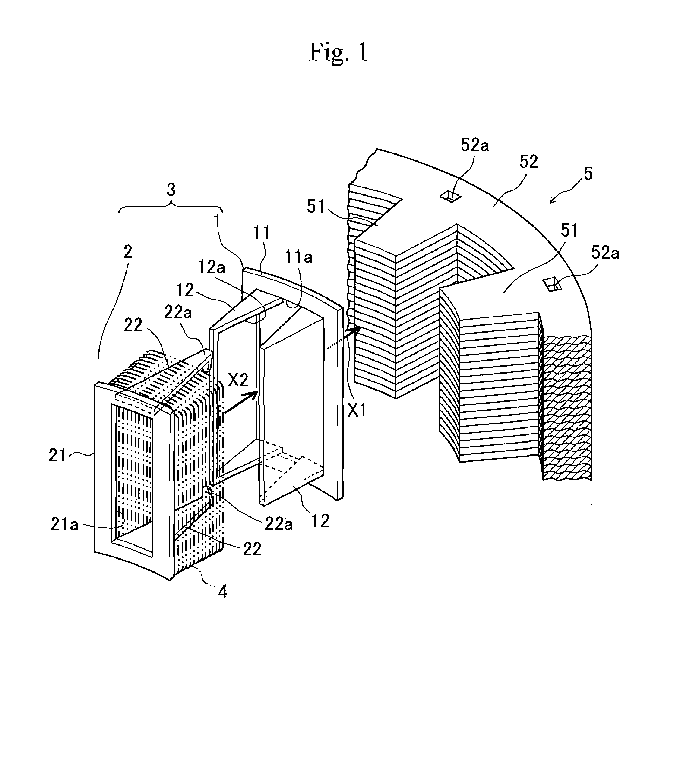

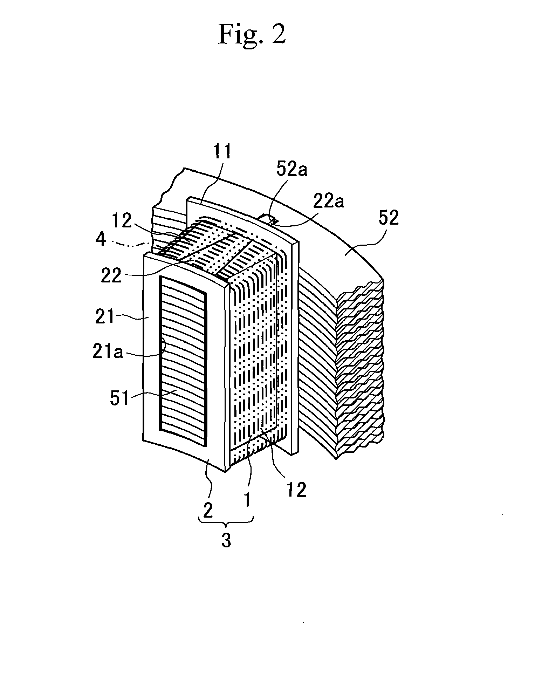

Fig. 1 is an exploded perspective view of an insulator of the present invention, describing the state where the insulator is fitted to a tooth of a stator. Fig. 2 is a perspective view showing one embodiment of an insulator provided with a coil formed around a tooth by the fitting shown in Fig. 1.

Fig. 1 is an exploded perspective view of a tooth 51 as a part of an annular stator 5 in a plan view and an insulator 3 provided with a coil 4 to be fitted thereto. Herein, the coil 4 is illustrated with dashed-dotted lines for clear viewing of a second split body 2 and the insulator 3.

A stator 5 making up a motor not illustrated includes an annular yoke 52, a plurality of teeth 51 inwardly protruding in a radial direction from the yoke 52..., and is formed by laminating a predetermined base number of annular pieces obtained by stamping an electromagnetic steel plate into a yoke and a tooth planar shape, and swaging the same, for example.

The insulator 3 includes a first split body 1 and a second split body 2, the first split body 1 being made of insulating resin and arranged on a root side of the tooth 51 and the second split body 2 being made of insulating resin and fitted to the first split body 1.

The first split body 1 includes a flange 11 on the tooth root side to hold the coil 4 arranged therearound at a yoke side end part and a tubular main body 12 contiguous to the flange 11, through which the tooth 51 penetrates. The flange 11 includes an opening 11a bored therein, through which the tooth 51 penetrates, and the main body 12 includes trapezoidal notches 12a bored on a top side and a bottom side thereof.

On the other hand, the second split body 2 includes a flange 21 on a tooth distal end side and side pieces 22, 22 contiguous to this flange 21 and having a complementary shape with the above-stated trapezoidal notches 12a, 12a. The flange 21 includes an opening 21a bored therein, through which the tooth 51 can penetrate, and each side piece 22 is provided with a hook 22a protruding toward the stator side at a tip end thereof.

Before the insulator 3 is fitted to the tooth 51, the coil 4, which is prepared by winding rectangular wire or the like beforehand, is loosely fitted to the side pieces 22 of the second split body 2, and the first and the second split bodies 1 and 2 are fitted to each other so that these side pieces 22 can be fitted to the notches 12a of the first split body 1 (X2 direction), whereby the insulator 3 around which the coil is provided can be formed at once.

Then, the insulator 3 is fitted to the tooth 51 (X1 direction), whereby a stator provided with the insulator including the coil can be formed.

Herein, the yoke 52 is provided with concave grooves 52a (this may be a through hole) at a part not influencing the magnetic flux flow, and the tip ends of the side pieces 22 of the second split body 2 fitted to the first split body 1 extend rearwardly of the flange 11 until their hooks 22a engage with the concave grooves 52a, whereby the fitting and fixing of the insulator 3 to the tooth 51 is finished as shown in Fig. 2.

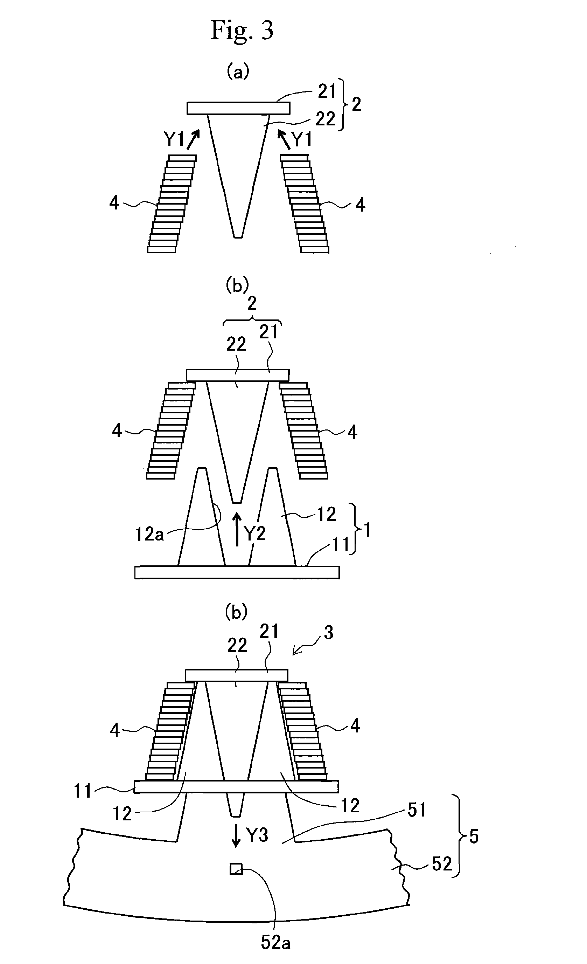

A manufacturing method of this stator is described more specifically below, with reference to the drawings showing the flow in the order of Fig. 3a, b and c.

Firstly, the first split body 1, the second split body 2 and the coil 4 are prepared, and as illustrated in Fig. 3a, the coil 4 prepared by winding rectangular wire is loosely fitted to the side pieces 22 of the second split body 2 (Y1 direction) so that the coil 4 is engaged with the flange 21.

Next, as illustrated in Fig. 3b, the side pieces 22 of the second split body 2 including the flange 21 on which the coil 4 is formed and the notches 12a of the main body 12 of the first split body 1 are fitted to each other (Y2 direction) so as to form the insulator, and concurrently with the formation of the insulator, the coil 4 is provided therearound.

During the provision of the coil 4 around the insulator as illustrated in Fig. 3b, the flange 21 making up this insulator does not interfere with the coil 4 at all.

Further, during the provision of this coil 4, there is no damaged part at the insulator.

After the insulator 3 around which the coil 4 is provided is formed, as illustrated in Fig. 3c, the insulator 3 is fitted to the tooth 51 of the stator 5 (Y3 direction), and the hooks 22a provided at the side pieces 22 of the second split body 2 are engaged with the concave grooves 52a of the yoke 52, whereby the stator 5 provided with the coil 4 and the insulator 3 can be manufactured.

Note here that when the stator includes split stators, an insulator provided with a coil is fitted to a tooth of each split stator core as in the illustrated example, and the split stator cores to which the insulators are fitted are assembled in a circumferential direction, whereby the split stators can be manufactured.

Instead of the manufacturing method illustrated in Fig. 3, i.e., the formation of the insulator, followed by fitting this to the tooth, the first split body may be fitted to the tooth, and then the second split body with which the coil is provisionally engaged may be fitted to the first split body.

In any manufacturing method, during the provision of the coil prepared by winding wire beforehand around the insulator provided with a flange on the teeth distal end side to prevent the coil from coming out, this flange does not interfere with the coil, and there is no damage at the insulator, and so the coil can be provided at the insulator effectively.

After the insulator provided with the coil is fitted to the tooth, resin may be molded to block a gap formed between the teeth and the insulator.

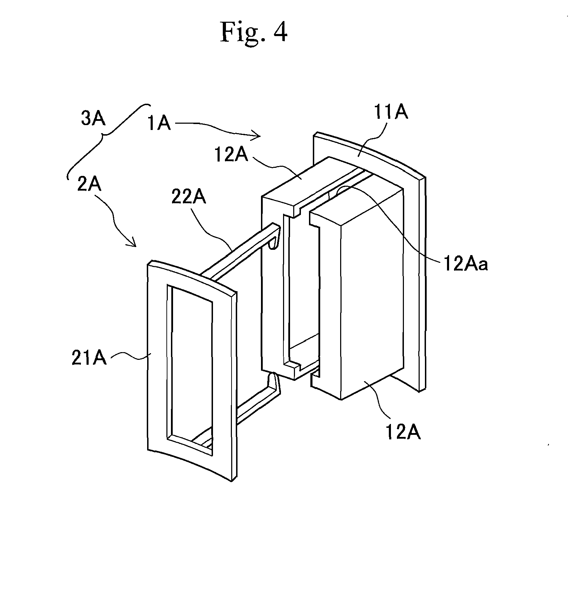

Fig. 4 is a perspective view illustrating another embodiment of the insulator.

An insulator 3A in the drawing includes a first split body 1A having a flange 11A on a teeth root side and a tubular main body 12A contiguous to the flange 11A and including elongated strip-shape notches 12Aa bored therein, and a second split body 2A having a flange 21A to prevent a coil from coming out and side pieces 22A contiguous to the flange 21A also having an elongated strip shape that is complementary to that of the notches 12Aa.

Although not illustrated, instead of the forms provided with the side pieces on the top and the bottom sides of the second split body as in Figs. 1 and 4, side pieces may be provided on left and right sides of the second split body, and the first split body may include a main body provided with notches on left and right side faces so as to be fitted to the side pieces. Alternatively, a side piece may be provided at each of the top side, the bottom side, the left side and the right side of the second split body, and the first split body may be provided with notches at the corresponding side faces so as to be fitted to these side pieces.

Although that is a detailed description of the embodiments of the present invention with reference to the drawings, the specific configuration is not limited to the above-stated embodiments, and it should be understood that we intend to cover by the present invention design modifications without departing from the spirits of the present invention.

## Claims

1. An insulator to be fitted to a tooth of a stator, on an outer periphery of the insulator a coil being formed, the insulator comprising:
a first split body to be disposed on a root side of the tooth when the insulator is fitted to the tooth, and a second split body to be disposed on a distal end side of the tooth and to be fitted to the first split body, thus forming the insulator,
wherein the second split body includes a flange at an end face on the distal end side of the tooth so as to prevent the coil from coming out of the insulator.

2. A motor, comprising: a stator to which the insulator according to claim 1 is fitted, the insulator including a coil around a tooth of a stator core; and a rotor inside the stator.

3. A method for manufacturing a stator including an insulator and a coil, comprising the steps of:
a first step of preparing the insulator including a first split body to be disposed on a root side of a tooth when the insulator is fitted to the tooth and a second split body to be disposed on a distal end side of the tooth and to be fitted to the first split body, thus forming the insulator, the second split body including a flange at an end face on the distal end side of the tooth so as to prevent the coil from coming out of the insulator; and
a second step of engaging the coil formed beforehand to the second split body and fitting the second split body to the first split body disposed on the tooth root side so as to form the insulator around the tooth, while forming the coil around the insulator.

4. A method for manufacturing a stator including an insulator and a coil, comprising the steps of:
a first step of preparing the insulator including a first split body to be disposed on a root side of a tooth when the insulator is fitted to the tooth and a second split body to be disposed on a distal end side of the tooth and to be fitted to the first split body, thus forming the insulator, the second split body including a flange at an end face on the distal end side of the tooth so as to prevent the coil from coming out of the insulator; and
a second step of engaging the coil formed beforehand to the second split body, fitting the second split body to the first split body so as to form the insulator around which the coil is formed, and fitting the insulator to the tooth.
